# EUROPÄISCHE PATENTSCHRIFT

(11) **EP 2 913 236 B1**
(45) Veröffentlichungstag und Bekanntmachung des Hinweises auf die Patenterteilung: **24.07.2019**
(21) Anmeldenummer: 15000367.1
(22) Anmeldetag: 07.02.2015
(51) Int. Cl.: B60T 11/10, B60T 13/58

(54) **Bremsmodul für ein hydraulisch gebremstes Zugfahrzeug, welches mit einem pneumatisch gebremsten Anhängefahrzeug koppelbar ist**
Brake module for a hydraulically braked towing vehicle which can be coupled together with a pneumatically braked trailer vehicle
Module de freinage pour un véhicule de traction à freinage hydraulique pouvant être couplé à une remorque à freinage pneumatique

(30) Priorität: 27.02.2014 DE 102014002614
(43) Veröffentlichungstag der Anmeldung: 02.09.2015
(73) Patentinhaber: WABCO GmbH, 30453 Hannover (DE)
(72) Erfinder: Klostermann, Thilo, 30161 Hannover (DE); Zielke, Frank, 30890 Barsinghausen (DE)
(74) Vertreter: Krause, Martin

(56) Entgegenhaltungen:
- EP-B1- 2 165 901
- DE-A1-102011 122 637

## Beschreibung

Bremsmodul für ein hydraulisch gebremstes Zugfahrzeug, welches mit einem pneumatisch gebremsten Anhängefahrzeug koppelbar ist.

Die Erfindung betrifft ein Bremsmodul für ein hydraulisch gebremstes Zugfahrzeug mit den Merkmalen des Oberbegriffes des Patentanspruchs 1.

Bestimmte hydraulisch gebremste Fahrzeuge, insbesondere landwirtschaftlich oder forstwirtschaftlich genutzte Zugfahrzeuge in Form von Ackerschleppern, Traktoren, Mähdreschern, aber auch leichte Lastkraftwagen weisen eine hydraulische Bremsanlage auf, welche in der Regel aus einem durch ein Fußbremspedal betätigten Bremszylinder besteht, welcher Hydraulikflüssigkeit den entsprechenden Radbremszylindern der Räder des Zugfahrzeugs zuführt. Die an das Zugfahrzeug ankoppelbaren Anhänger sind im Gegensatz zum Zugfahrzeug pneumatisch gebremst. Auf Grund der unterschiedlichen Druckmedien, nämlich Hydraulikflüssigkeit für die Betriebsbremsanlage des Zugfahrzeugs und Druckluft für die Bremsanlage des Anhängerfahrzeuges, ist es bei derartigen Fahrzeugkombinationen notwendig, den hydraulischen Bremsdruck des Zugfahrzeugs in einen pneumatischen Druck für die Bremsanlage des Anhängers umzuwandeln. Seit Jahrzehnten wird hierzu ein am Zugfahrzeug angeordnetes Anhängersteuerventil verwendet, welches beispielsweise von der Anmelderin unter der Teilenummer 470 015 ... erhältlich ist. Derartige Anhängersteuerventile sind rein mechanisch aufgebaut; bei diesen wird hydraulischer Steuerdruck in pneumatischen Ausgangsdruck umgewandelt und dem Anhängerfahrzeug zugeleitet.

Nachteilig an diesen rein mechanischen Anhängersteuerventilen ist, dass auf Grund der relativ großen, bauartbedingten Hysterese der Bremsdruck erst mit einer gewissen Verzögerung dem Anhängerfahrzeug zugeführt werden kann, was zu eingeschränkter Dosierbarkeit und schlechtem Ansprechverhalten führt. Ein Vorteil der konventionell aufgebauten Anhängersteuerventile ist ihre robuste Bauweise, welche relativ störunanfällig ist. Da derartige Anhängersteuerventile rein mechanisch betrieben werden, kann naturgemäß keine Elektronikkomponente ausfallen, da diese von vornherein nicht vorhanden ist.

Aus der DE 197 52 147 B4 ist einer Bremsanlage für ein hydraulisch gebremstes, mit einem pneumatisch gebremsten Anhänger koppelbaren Kraftfahrzeugs bekannt, bei welcher der hydraulische Druck der Betriebsbremse nur mittelbar zur Steuerung der pneumatischen Bremsanlage des Anhängerfahrzeuges genutzt wird. Dort wird der hydraulische Druck der Ausgangsleitungen des Hauptbremszylinders durch einen Drucksensor in ein elektrisches Signal umgewandelt, einer elektronischen Steuereinrichtung zugeführt, welche die gewonnen Drucksignale auswertet und ein Proportional-Relaisventil schaltet, welches zwischen einem Druckluftbehälter und einem rein pneumatisch gesteuerten Anhängersteuerventil zwischengeschaltet ist. Dieses Proportional-Relaisventil ist normalerweise geschlossen und wird nur geöffnet, wenn ein entsprechendes Signal vom Steuergerät an das Proportional-Relaisventil angelegt wird. Ein Vorteil einer derartigen Lösung ist, dass sehr schnelle Schaltzeiten ermöglicht werden, da das Problem der Hysterese der zuvor beschriebenen Anhängersteuerventile bei einer derartigen Lösung entfällt. Leider erfährt der Fachmann aus der DE 197 52 147 B4 nicht, wie er im Redundanzfall mit einer derartigen Anordnung umgehen sollte. Unter Redundanzfall versteht der Fachmann beispielsweise den Teil- oder Komplettausfall der elektronischen Anlage bzw. der elektronischen Komponenten. Fällt die Elektronik aus, werden beispielsweise Magnetventile nicht mehr geschaltet, also auch nicht geöffnet bzw. geschlossen. Dies führt dazu, dass entweder nicht mehr gebremst werden kann, oder das eine Notbremsung herbeigeführt wird, etwas in dem der volle Vorratsdruck durch ein normalerweise offenes Magnetventil durchgeschleust und einer Bremsanlage zugeführt wird.

Das Thema Ausfallsicherheit ist ebenfalls in der DE 10 2011 053 707 A1 betrachtet.

Ausführlich mit dem Redundanzfall beschäftigt sich dann die EP 2 165 901 B1. Bei dieser ist ein elektro-pneumatischer Beaufschlagungspfad und ein hydraulisch-pneumatischer Beaufschlagungspfad vorgesehen. Im Normalfall, also wenn keine elektrischen oder elektronischen Fehler vorliegen, wird nach Maßgabe des hydraulischen Drucks ein entsprechendes Drucksignal einem pneumatischen Druckregelmodul zugeführt, welches in Abhängigkeit des elektrischen Signals einen pneumatischen Ausgangsdruck für die pneumatische Anhängerbremsanlage erzeugt. Das Druckregelmodul entspricht von seiner Funktion her einem elektro-pneumatischen Anhängersteuerventil einer Lastkraftwagen-Bremsanlage, bei der ja sowohl Zugfahrzeug, als auch Anhängerfahrzeug pneumatisch gebremst werden.

Dem Druckregelmodul vorgeschaltet ist ein herkömmliches Anhängersteuerventil, bei dem hydraulischer Steuerdruck in einen pneumatischen Ausgangsdruck umgewandelt wird. Der pneumatische Ausgangsdruck des Anhängersteuerventils wird hierbei als Steuerdruck für einen Steuereingang des Druckregelmoduls verwendet.

Im Redundanzfall, also bei Ausfall des Druckregelmoduls wird der pneumatische Ausgangsdruck des Anhängersteuerventils durch das Druckregelmodul durchgeleitet und der Anhängerbremsanlage zugeführt. Ein Vorteil einer derartigen Lösung ist also, dass hier auch für den Redundanzfall, also für den Ausfall der elektronischen Anlage, eine Rückfallebene vorgesehen wird, bei der die Anhängerbremsanlage immer noch betätigt werden kann.

Nachteilig an dieser Lösung ist jedoch, dass das hydraulisch-pneumatische Anhängersteuerventil dem elektro-pneumatischen Druckregelmodul vorgeschaltet ist. Das Druckregelmodul erhält seinen pneumatischen Steuerdruck also auch bei voll funktionsfähiger elektronischer Regelung vom Anhängersteuerventil. Hierbei kommen jedoch die Nachteile des hydraulisch-pneumatischen Anhängersteuerventils zum Tragen, da durch die Hysterese einer derartigen Ventilanordnung der Steuerdruck für das Druckregelmodul mit einer gewissen Zeitverzögerung zugeführt wird, wodurch die Vorteile eines elektro-pneumatischen Druckregelmoduls zumindest teilweise aufgehoben werden.

Hier setzt die Erfindung an, deren Aufgabe es ist, ein Bremsmodul der eingangs geschilderten Art dahingehend zu verbessern, dass einem elektro-pneumatischen Druckregelmodul ein mit der Bremspedalposition korrelierendes elektronisches Steuersignal direkt und ohne Umweg über ein hydraulisch-pneumatisches Anhängerbremsventil zuführbar ist, wobei eine Ventilanordnung im System vorgesehen sein soll, das die Bremsung des Anhängerbremsfahrzeuges auch bei Ausfall des elektro-pneumatischen Druckregelmoduls ermöglicht.

Diese Aufgabe wird mit einem Bremsmodul gelöst, welches die Merkmale des Patentanspruchs 1 aufweist.

Die Aufgabe wird also auf überraschend einfache Art und Weise dadurch gelöst, dass die Redundanzventilanordnung dem elektro-pneumatischen Bremsmodul nicht vorgeschaltet ist, sondern in pneumatischer Hinsicht parallel zu diesem angeordnet ist und im Redundanzfall pneumatischen Bremsdruck direkt und ohne Umwege über das Druckregelmodul der pneumatischen Steuerdruck der pneumatischen Bremsanlage des Anhängerfahrzeuges zuführt. Der pneumatische Ausgangsdruck der Redundanz-Ventilanordnung wird also ausschließlich im Redundanzfall genutzt. Anders ausgedrückt haben Redundanz-Ventilanordnung und elektro-pneumatisches Bremsmodul nichts miteinander zu tun und beeinflussen sich in pneumatischer Hinsicht überhaupt nicht, so dass insbesondere das elektro-pneumatische Bremsmodul im Normalfall unabhängig von der Redundanz-Ventilanordnung arbeitet. Erst im Redundanzfall wird die Redundanz-Ventilanordnung mit Leben erfüllt und übernimmt dann ebenso unabhängig vom elektro-pneumatischen Bremsmodul dessen Funktion.

Erwähnt sei an dieser Stelle, dass unter Redundanzfall nicht nur ein Fehler eines der elektrischen bzw. elektronischen Komponenten des Bremsmoduls verstanden sein soll, sondern auch der Fall, bei dem die Zündung des Zugfahrzeugs schlicht ausgestellt ist. Steht ein solches Zugfahrzeug mit angekoppeltem Anhängefahrzeug beispielsweise an einem Hang, kann es vorkommen, dass der Fahrer trotzdem eine Bremsung wünscht.

Ein besonderer Vorteil einer derartigen Lösung besteht darin, dass im Normalfall, also beim Funktionieren aller elektrischen und elektronischen Komponenten des Zugfahrzeugs bzw. des elektro-pneumatischen Druckregelmoduls Druckluft direkt dem Druckregelmodul zugeführt wird, welches aufgrund von elektronisch verarbeiteten Drucksignalen der hydraulischen Bremsanlage Druckluft entsprechend der vorgegebenen Druckwerte an die Bremsanlage des Anhängerfahrzeuges aussteuert. Im Redundanzfall, dass heißt, wenn ein oder mehrere elektronische Fehler auftreten, wird die Redundanz-Ventilanordnung aktiviert, welche Druckluft ohne Umweg über das Druckregelmodul der pneumatischen Bremsanlage des Anhängerfahrzeuges zuführt.

Die Erfindung lässt sich noch dadurch ergänzen, dass vorgesehen ist, dass ein Wechselventil eingangsseitig mit dem pneumatische Ausgang der Redundanz-Ventilanordnung bzw. mit dem pneumatischen Steuerdruck-Ausgang des elektro-pneumatischen Druckregelmoduls und ausgangsseitig mit dem Steuerdruck-Kupplungskopf verbunden ist. Bekanntlich bewirken Wechsel- oder Doppelrückschlagventile mit zwei Eingängen, dass ein Eingang, an dem kein oder ein im Vergleich zum am anderen Eingang anstehenden Druck geringerer Druck ansteht, abgesperrt und der Eingang mit größerem Druck geöffnet ist. Durch das Wechselventil wird eine überraschend einfache Lösung geschaffen, bei der das System dem Steuer-Kupplungskopf stets Druck zuführen kann, wobei es systemtechnisch egal ist, ob der Druck von der Redundanz-Ventilanordnung oder vom elektro-pneumatischen Druckregelmodul erzeugt wird.

In einer anderen praktischen Weiterbildung der Erfindung ist vorgesehen, dass die Redundanz-Ventilanordnung aus einem mechanischen Druckuntersetzer-Relaisventil und einem im unbestromten Zustand offenen Redundanz-Magnetventil besteht, wobei das Redundanz-Magnetventil im bestromten Zustand den pneumatische Ausgang der Redundanz-Ventilanordnung absperrt und im unbestromten Zustand den pneumatische Ausgang der Redundanz-Ventilanordnung frei gibt.

Besonders praktisch ist eine Ergänzung der Erfindung, welche sich dadurch auszeichnet, dass das Druckuntersetzer-Relaisventil einen hydraulischen Steuereingang und einen pneumatischen Steuereingang aufweist.

Diese Ausgestaltung lässt sich noch dadurch ergänzen, dass vorgesehen ist, dass das Bremsbetätigungsorgan mit einem an den Druckluftbehälter angeschlossen 3/2-Wegeventil verbunden ist, welches bei Betätigung des Bremsbetätigungsorgans geöffnet ist und Druckluft zum Anschluss und in den pneumatischen Steuereingang des Druckuntersetzer-Relaisventils freigibt.

In einer besonders bevorzugten Ausgestaltung der Erfindung ist vorgesehen, dass das Redundanz-Magnetventil direkt an den pneumatischen Druckausgang des Druckuntersetzer-Relaisventils angeflanscht ist.

Besonders vorteilhaft ist eine Weiterbildung der Erfindung, die sich dadurch auszeichnet, dass das Druckregelmodul, die elektronische Steuerung und die Redundanz-Ventilanordnung in einem gemeinsamen Gehäuse angeordnet sind.

Alternativ kann vorgesehen sein, dass das Druckregelmodul, die elektronische Steuerung und die Redundanz-Ventilanordnung aneinander angeflanscht sind.

Weitere Vorteile und Ausgestaltung der Erfindung werden anhand der Unteransprüche und anhand eines Ausführungsbeispieles in der Zeichnung näher beschrieben.

In der Zeichnung zeigt:
Fig. 1: ein erstes Ausführungsbeispiel eines Schaltschemas eines erfindungsgemäßen Bremsmoduls,
Fig. 2: schematisch ein Zugfahrzeug, mit daran angebauten Komponenten des Bremsmoduls aus Figur 1,
Fig. 3: ein zweites Ausführungsbeispiel eines Schaltschemas eines erfindungsgemäßen Bremsmoduls,
Fig. 4: ein drittes Ausführungsbeispiel eines erfindungsgemäßen Schaltschemas eines Bremsmoduls, und
Fig. 5: eine Redundanz-Ventilanordnung.im Längsschnitt gemäß dem zweiten Ausführungsbeispiel des erfindungsgemäßen Bremsmoduls.

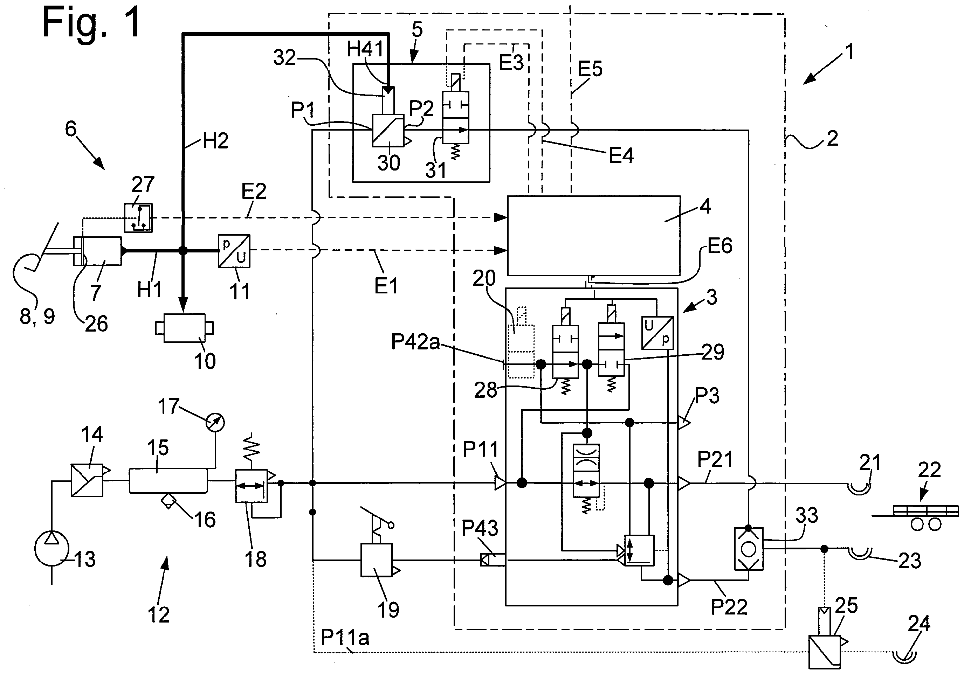

In Figur 1 ist ein erstes Ausführungsbeispiel eines erfindungsgemäßen Bremsmoduls 1 als Schaltschema dargestellt. Die Zeichnungssymbole entsprechen in der Darstellung der DIN 74253, während die pneumatischen bzw. hydraulischen Anschlüsse und Leitungen in Anhalt an die DIN ISO 6786 ausgeführt sind, wobei zur besseren Abgrenzung zu den Bezugsziffern der Bauteile den pneumatischen Leitungen und Anschlüssen ein "P" und den hydraulischen Leitungen und Anschlüssen ein "H" vorangestellt ist, während die elektrischen Leitungen ein Präfix "E" aufweisen.

Das an einem in Figur 1 nicht dargestellten Zugfahrzeug angeordnete Druckregelmodul 1 fungiert als Anhängersteuerventil und weist innerhalb eines nur schematisch angedeuteten Gehäuses 2 ein elektro-pneumatisches Druckregelmodul 3 mit einer elektronischen Steuerung 4 auf, wobei die Steuerelektronik 4 üblicherweise auch als "Electronic Control Unit (ECU)" bezeichnet wird. Im dargestellten Ausführungsbeispiel ist die Steuerelektronik 4 mit einem eigenen Gehäuse versehen, das direkt an ein Gehäuse des elektro-pneumatischen Druckregelmoduls 3 angeflanscht ist. Denkbar ist es jedoch auch, die Steuerelektronik 4 an anderer, geeigneter Stelle des Zugfahrzeugs anzubringen. Die elektrische Verbindung von elektronischer Steuerung 4 mit dem elektro-pneumatischen Druckregelmodul 3 ist durch eine elektrische Leitung E6 angedeutet.

In auf noch näher zu beschreibender Weise ist eine Redundanz-Ventilanordnung 5 im Bremsmodul 1 angeordnet und funktional mit dem elektro-pneumatischen Druckregelmodul 3 verbunden. Außerhalb des Bremsmoduls 1 sind die Komponenten der hydraulisch betätigten Betriebsbremse 6 angeordnet, von denen in Figur 1 lediglich vereinfacht ein Hauptbremszylinder 7 dargestellt ist, welcher durch ein Bremsbetätigungsorgan 8 in Form eines Bremspedals 9 betätigbar ist. Über eine Hydraulikdruckleitung H1 gelangt hydraulische Flüssigkeit zu den einzelnen Radbremszylindern des Zugfahrzeugs, was in Figur 1 lediglich schematisch durch einen Radbremszylinder 10 angedeutet ist. Von der Hydraulikdruckleitung H1 zweigt eine Hydraulikabzweigleitung H2 ab, durch welche Hydraulikflüssigkeit der Redundanz-Ventilanordnung 5 zugeführt wird. An die Hydraulikdruckleitung H1 angeschlossen ist ein Drucksensor 11, welcher den in der Hydraulikdruckleitung H1 herrschenden hydraulischen Druck erfasst und in ein elektrisches Signal umwandelt, welches über eine elektrische Leitung E1 der Steuerelektronik 4 des Bremsmoduls 1 zugeführt wird.

Neben der Betriebsbremse 6, durch welche hydraulischer Druck erzeugbar ist, ist am Zugfahrzeug noch eine Drucklufterzeugungsanlage 12 vorhanden, welche aus einem mit dem Antriebsmotor des Zugfahrzeugs verbundenen Kompressor 13, einen Druckregler 14, einen Druckluftspeicher 15 mit Entwässerungsventil 16 und Manometer 17, sowie einem dem Druckluftbehälter 15 nachgeordneten Druckbegrenzungsventil 18 besteht. Über dieses Druckbegrenzungsventil 18 wird ein pneumatischer Vorratsdruck in Höhe von etwa 8,5 bar einem pneumatischen Vorratsdruck-Eingang P11 dem elektro-pneumatischen Druckregelmodul 3 und einem parallel geschalteten Handbremsventil 19 zugeführt, welches bei Betätigung pneumatischen Druck an einen pneumatischen Steuerdruckeingang P43 an das elektro-pneumatische Druckregelmodul 3 abgibt.

Das elektro-pneumatische Druckregelmodul 3 mit seiner Steuerelektronik 4 entspricht weitestgehend einem im Handel erhältlichen Anhängersteuerventil, welches von der Anmelderin unter der Teilenummer 480 204 032 0 vertrieben wird und zudem eine Beschreibung im Internet unter dem Link:
http://inform.wabco-au-to.com/scripts/download.php?from=/intl/de/inform.php&lana=&kevwords=4802040320&file =../intl/drw/9/4802040320.pdf
abrufbar ist. Bei diesem Gerät wird pneumatischer Druck über einen Anschluss 42 eingeleitet, wobei direkt am pneumatischen Anschluss 42 ein im unbestromten Zustand offenes Magnetventil angeordnet ist, welche bei dem Gerät 480 204 032 0 als Redundanzventil dient. Dieses Redundanzventil 20 ist bei dem elektro-pneumatischen Druckregelmodul 3 gemäß der Erfindung nicht vorhanden, weshalb es in Figur 1 nur angedeutet und in punktierter Linie dargestellt ist. Ebenfalls ist der dem Anschluss 42 des Gerätes 480 204 032 0 entsprechende pneumatische Steuerdruckanschluss P42a beim erfindungsgemäßen elektro-pneumatischen Druckregelmodul 3 funktionslos und beispielsweise durch einen Blindstopfen verschlossen. Diese Anordnung hat den Vorteil, dass ein Ventil eingespart werden kann, nämlich das Redundanzventil 20.

Ansonsten weist das elektro-pneumatische Druckregelmodul die vom bekannten Gerät 480 204 032 0 bekannten Ventile und ihre Verschaltungen auf, auf welche es hier im Einzelnen nicht näher ankommt. Wichtig ist lediglich, dass der Vorratsdruck aus dem Druckluftbehälter 15 über den pneumatischen Vorratsdruck-Eingang P11 durch das elektro-pneumatische Druckregelmodul durchgeleitet und über einen pneumatischen Ausgang P21 des elektro-pneumatischen Druckregelmoduls zu einem Vorrats-Kupplungskopf 21 geführt wird, an welchem eine entsprechende Vorratsleitung eines in Figur 1 nur angedeuteten Anhängefahrzeugs 22 ankoppelbar ist. Das Anhängefahrzeug 22 ist über entsprechende, nicht dargestellte Kupplungsköpfe mit dem Vorrats-Kupplungskopf 21 sowie einem Steuerdruck-Kupplungskopf 23 verbindbar. Für den Fall, dass an das Zugfahrzeug ein Anhängefahrzeug älterer Bauart mit einer Einleitungsbremse angekoppelt werden soll, kann noch ein Einleitungs-Kupplungskopf 24 in das System eingebunden werden, welcher durch ein Relaisventil 25 mit dem Steuerdruck-Kupplungskopf 23 bzw. über eine pneumatische Vorratsdruckleitung P11a mit dem Druckluftbehälter 15 verbunden ist.

Im Normalfall, also bei funktionierender Elektrik bzw. Elektronik läuft eine Bremsung des Zugfahrzeugs mit dem daran angekoppelten Anhängerfahrzeug 22 wie folgt ab:
Tritt der Fahrer auf das Bremspedal 9, bewegt sich entsprechender Bewegung des Bremspedals 9 ein Kolben 26 des Hauptbremszylinders 7 und drückt Hydraulikflüssigkeit über die Hydraulikdruckleitung H1 zu den Radbremszylindern 10 des Zugfahrzeugs, wodurch die Räder des Zugfahrzeugs gebremst werden. Die Bewegung des Kolbens 26 des Hauptbremszylinders 7 betätigt einen elektrischen Schalter 27, wodurch ein elektrisches Signal erzeugt und über eine elektrische Leitung E2 der Steuerelektronik 4 zugeführt wird. Die Bewegung des Kolbens 26 des Hauptbremszylinders 7 erzeugt einen hydraulischen Druck, welcher durch den Drucksensor 11 erfasst und über die elektrische Leitung E1 ebenfalls der Steuerelektronik 4 zugeführt wird. Aus den erhaltenen Signalen errechnet die Steuerelektronik, wie die Magnetventile 28, 29 des elektro-pneumatischen Druckregelmoduls betätigt werden müssen und bestromt entsprechend die Magnetventile 28, 29. Entsprechend der Vorgaben wird dann ein entsprechender Druck ausgesteuert, welcher über einen Druckausgang P22 das elektro-pneumatische Druckregelmodul verlässt und zum Steuerdruck-Kupplungskopf 23 gespeist wird. Der am Steuerdruck-Kupplungskopf 23 anliegende Brems-Steuerdruck wird der Bremsanlage des Anhängers zugeführt und das Anhängefahrzeug entsprechend mit dem Zugfahrzeug abgebremst.

Je nach Steuerstrategie und je nach weiteren zur Bestimmung des Maßes und des Zeitpunktes der Bremsung des Anhängefahrzeugs 22 herangezogenen Werten, kann das Anhängefahrzeug voreilend gebremst werden, dass heißt, dass das Anhängefahrzeug 22 vor der Bremsung des Zugfahrzeugs eingebremst wird, um auf diese Weise ein Auflaufen des Anhängefahrzeuges 22 auf das Zugfahrzeug zu verhindern. Es können weitere Werte durch Sensoren erfasst werden, um Bremsregelstrategien zu verbessern. So können -was in Figur 1 nicht dargestellt ist- weitere Sensoren vorhanden sein, die beispielsweise den Lenkwinkel des Zugfahrzeugs, Raddrehzahlen, den Gierwinkel oder Schleppmomente vom Verbrennungsmotor oder einem Getriebe erfassen und der Steuerelektronik 4 zuleiten. So bietet es sich beispielsweise an, ABS-Sensoren, welche im Fahrzeug vorhanden sind, zu nutzen, um das Anhängefahrzeug 22 bei kritischen Fahrbedingungen entsprechend bremsen zu können.

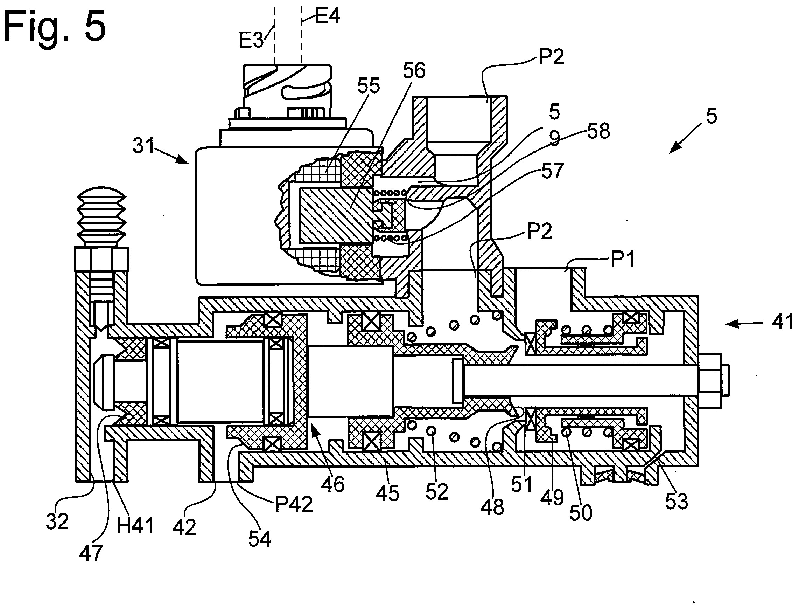

Fällt ein Teil der Elektronik oder der elektrischen Anlage aus, ist das elektro-pneumatische Druckregelmodul 3 funktionslos. Damit das Zugfahrzeug und das Anhängefahrzeug 22 dennoch gebremst werden können, ist die Redundanz-Ventilanordnung 5 vorgesehen. Diese besteht aus einem mechanischen Druckuntersetzer-Relaisventil 30 und einem nachgeschalteten, normalerweise offenen 2/2-Magnetventil, welches ein Redundanz-Magnetventil 31 bildet. Die konstruktiven Einzelheiten der Redundanz-Ventilanordnung 5 mit Druckuntersetzer-Relaisventil 30 und Redundanz-Magnetventil 31 werden anhand von Figur 5 noch näher erläutert werden. Anhand von Figur 1 soll zunächst die grundsätzliche Funktion der Redundanz-Ventilanordnung 5 besprochen werden. Im Redundanzfall, also bei Ausfall der Elektronik, gelangt hydraulischer Druck über die hydraulische Hydraulikabzweigleitung H2 zu einem hydraulischen Steuereingang 32 des Druckuntersetzer-Relaisventils 30. Der hydraulische Druck, welcher am hydraulischen Steuereingang H41 anliegt, bewegt einen Kolben des Druckuntersetzer-Relaisventils, was bewirkt, dass ein mit dem Druckluftbehälter 15 verbundener pneumatischer Eingang P1 des Druckuntersetzer-Relaisventils 30 mit einem pneumatischen Ausgang P2 verbunden wird. Entsprechend gelangt ausgesteuerter Druck über den Ausgang P2 zum Redundanz-Magnetventil 31. Dieses ist im unbestromten Zustand geöffnet, so dass der ausgesteuerte Druck über ein Wechselventil 33 zum Steuerdruck-Kupplungskopf 23 gelangt. Das Wechselventil 33 ist zum Einen mit dem Redundanz-Magnetventil 31 und zum Anderen mit dem pneumatischen Steuerdruck-Ausgang P22 des elektro-pneumatischen Druckregelmoduls 3 verbunden. Je nach anstehendem Druck verbindet das Wechselventil 33 den Steuerdruck-Kupplungskopf 23 mit dem Redundanz-Magnetventil 31 oder mit dem Steuerdruck-Ausgang P22 des elektro-pneumatischen Druckregelmoduls 3.

Bei funktionierender Elektronik bzw. elektrischen Anlage ist das Redundanz-Magnetventil 31 geschlossen, da dieses dann bestromt ist und in seine geschlossene Stellung gebracht wird, wodurch die Redundanz-Ventilanordnung 5 außer Funktion gesetzt ist.

In Figur 1 ist ferner noch eine elektrische Leitung E5 angedeutet, über welche die Steuerelektronik 4 des elektro-pneumatischen Druckregelmoduls 3 mit dem CAN-Bus des Zugfahrzeugs verbunden ist. Ferner ist in Fig. 1 noch ein pneumatischer Entlüftungsausgang P3 des Druckregelmoduls 3 dargestellt, auf den es aber nicht weiter ankommt.

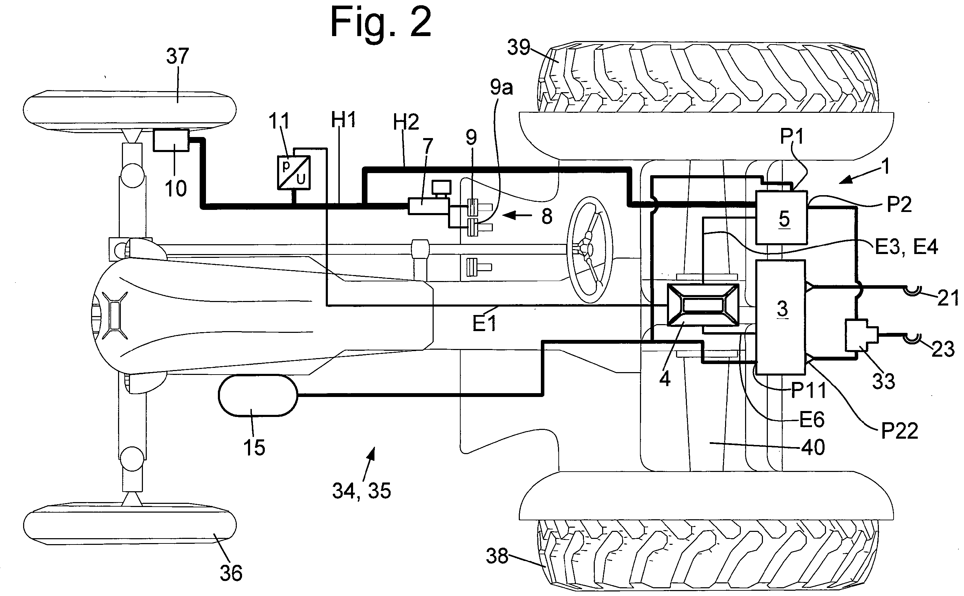

In Figur 2 ist ein Zugfahrzeug 34 in Form eines Ackerschleppers 35 dargestellt. Dieser weist in an sich bekannter Weise zwei gelenkte Vorderräder 36, 37 und zwei ungelenkte Hinterräder 38, 39 auf. Den Vorderrädern 36, 37 und den Hinterrädern 38, 39 ist jeweils eine nicht dargestellte Radbremse zugeordnet, die jeweils durch einen Radbremszylinder 10 betätigbar ist, wobei in Figur 2 vereinfachend nur ein Radbremszylinder 10 dargestellt ist, welcher dem rechten Vorderrad 37 zugeordnet ist. Figur 2 soll vor allem veranschaulichen, wo am Zugfahrzeug 34 die wesentlichen Komponenten des Bremsmoduls 1 angeordnet sind bzw. angeordnet sein können. In Figur 2 ist auch zu erkennen, dass -wie bei Ackerschleppern üblich- das Bremsbetätigungsorgan 8 zwei Bremspedale 9, 9a aufweist, durch welche bei Fahrt abseits befestigter Straßen die Bremsen der rechten bzw. linken Fahrzeugseite zur Erzeugung von Lenkbremsungen betätigt werden können. Die Bremspedale 9, 9a sind mechanisch mit dem Hauptbremszylinder 7 verbunden, durch welchen hydraulischer Druck über die Hydraulikdruckleitung H1 den Radbremszylindern 10 zugeführt wird. Von der Hydraulikdruckleitung H1 zweigt die Hydraulikabzweigleitung H2 ab, durch welche hydraulischer Steuerdruck an das in Figur 2 nur schematisch dargestellte Redundanz-Ventilanordnung 5 zugeführt wird. Die Redundanz-Ventilanordnung 5 ist im Bereich einer Hinterachse 40 des Zugfahrzeugs 34 angeordnet, ebenso wie das elektro-pneumatische Druckregelmodul 3. Die Steuerelektronik 4, welche gemäß Figur 2 auf der Hinterachse 40 angeordnet ist, kann auch an anderer Stelle des Fahrzeugs angeordnet sein, beispielsweise kann sie an das elektro-pneumatische Druckregelmodul 3 angeflanscht sein, oder kann sich auch an ganz anderer Stelle des Zugfahrzeugs befinden. Ebenso ist es in abweichender Darstellung nach Figur 2 möglich, die Redundanz-Ventilanordnung 5 an das elektro-pneumatische Druckregelmodul anzuflanschen.

Auf die geschilderte Weise wird ein Bremsmodul 1 geschaffen, das auf Grund seiner Module 3, 4, 5, 33 beliebig miteinander kombinierbar ist bzw. deren Module 3, 4, 5, 33 sich an beliebiger bzw. besonders geeigneter Stelle des Zugfahrzeugs 34 anordnen lassen. So können die einzelnen Module 3, 4, 5, 33 aneinander angeflanscht oder verteilt am Zugfahrzeug 34 angebracht sein.

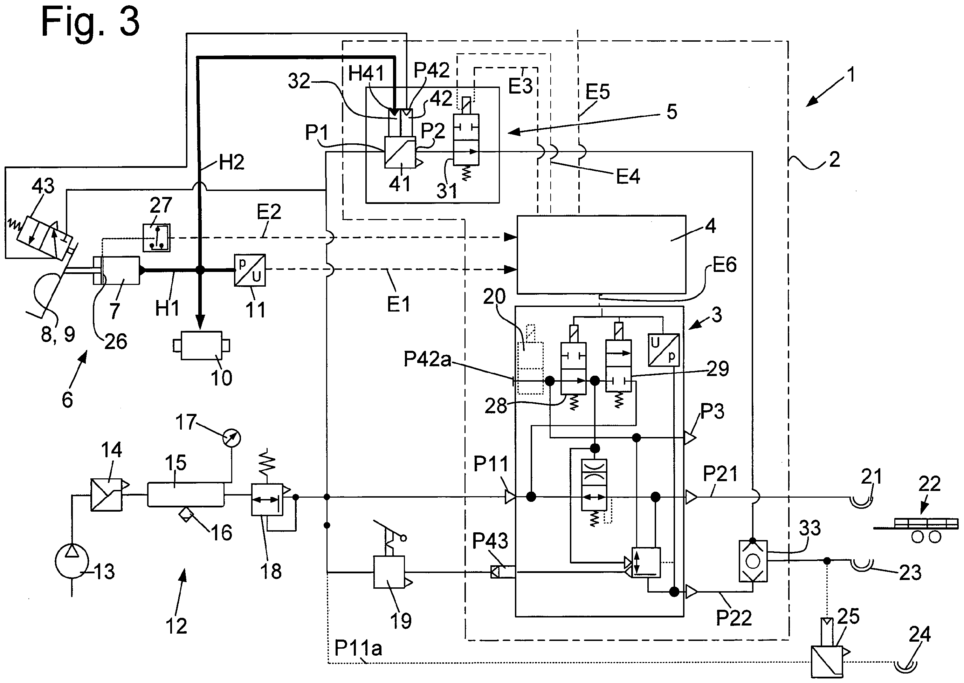

In Figur 3 ist ein zweites Ausführungsbeispiel eines erfindungsgemäßen Bremsmoduls 1 dargestellt, das weitgehend dem in Figur 1 dargestellten entspricht und für gleiche Teile gleiche Bezugszeichen verwendet. Auch die Funktion des Bremsmoduls 1 gemäß Figur 3 entspricht grundsätzlich der zuvor anhand der Figur 1 beschriebenen; nachfolgend soll daher ausschließlich auf die Unterschiede zu dem Bremsmodul 1 gemäß Figur 1 eingegangen werden. Der wesentliche Unterschied der Anordnung gemäß Figur 3 besteht in einer anderen Ausgestaltung eines Druckuntersetzer-Relaisventils 41 der Redundanz-Ventilanordnung 5. Wie das Druckuntersetzer-Relaisventil 30 der Figur 1 weist das Druckuntersetzer-Relaisventil 41 gemäß Figur 3 einen hydraulischen Steuereingang 32 auf, an welchem hydraulischer Druck über einen Steuereingang H41 anliegt. Zusätzlich zum hydraulischen Steuereingang 32 weist das Druckuntersetzer-Relaisventil 41 auch einen pneumatischen Steuereingang 42 auf, in welchen pneumatischer Druck über einen pneumatischen Steuereingang P 42 eingespeist wird. Um pneumatischen Steuerdruck entsprechend der Betätigung des Bremspedals 9 in den Steuereingang 42 des Druckuntersetzer-Relaisventils 41 einspeisen zu können, ist das Bremspedal 9 mit einem 3/2-Wegeventil 43 verbunden. Das normalerweise geschlossene 3/2-Wegeventil ist an den Druckluftbehälter 15 angeschlossen. Bei Betätigung des Bremspedals 9 wird das 3/2-Wegeventil 43 geöffnet und es strömt Druckluft zum Anschluss P42 und in den pneumatischen Steuereingang 42.

Im Normalfall, also bei funktionierender Elektrik und Elektronik, ist auch das Druckuntersetzer-Relaisventil 41 gemäß Figur 3 wirkungslos, da das nach geschaltete Redundanz-Magnetventil 31 geschlossen ist, so dass kein pneumatischer Druck zum Steuerdruck-Kupplungskopf 23 gelangt. Auch bei dieser Anordnung wird also der Steuerdruck durch das elektro-pneumatische Druckregelmodul 3 erzeugt. Im Redundanzfall aber, dass heißt, wenn die Elektrik oder Elektronik wenigstens teilweise ausgefallen ist, ist auch bei der Anordnung gemäß Figur 3 das Redundanz-Magnetventil 31 geöffnet, da es nicht mehr über die elektrischen Leitungen E3, E4 bestromt ist. In diesem Fall wird der pneumatische Steuerdruck über den pneumatischen Ausgang P2 dem Wechselventil 33 zugefügt, über welches der pneumatische Steuerdruck zum Steuerdruck-Kupplungskopf 23 gelangt. Da bei der Anordnung gemäß Figur 3 zusätzlich zum hydraulischen Druck pneumatischer Steuerdruck auf den pneumatischen Steuereingang 42 wirkt, lässt sich eine schnellere bzw. frühzeitigere Bremsung des Anhängerfahrzeuges 22 erreichen, bzw. die Voreilung des Anhängerfahrzeuges 22 besser regulieren und einstellen.

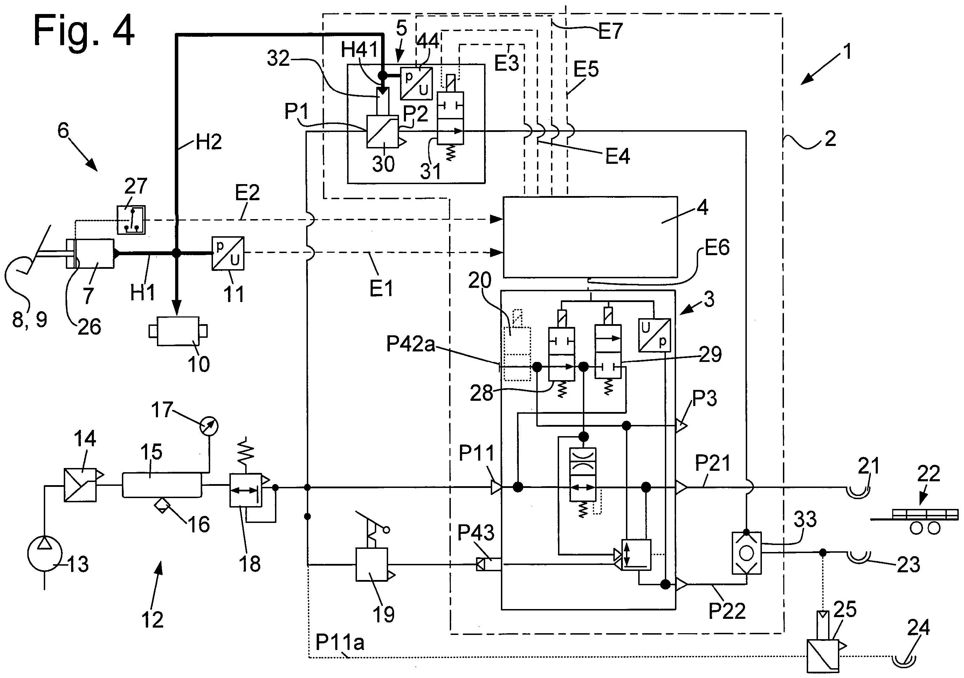

In Figur 4 ist ein drittes Ausführungsbeispiel eines erfindungsgemäßen Bremsmoduls 1 dargestellt, welches weitgehend dem in Figur 1 dargestellten Bremsmodul 1 entspricht und für gleiche Teile gleiche Bezugszeichen verwendet. Auch ansonsten ist die Funktion und Wirkungsweise des Bremsmoduls 1 gemäß Figur 4 die gleiche, wie die des Bremsmoduls 1 gemäß Figur 1. Der einzige Unterschied besteht darin, dass in der Redundanz-Ventilanordnung 5 ein zusätzlicher Drucksensor 44 vorgesehen ist, welcher über eine elektrische Leitung E7 mit der Steuerelektronik 4 verbunden ist. Der Drucksensor 44 erfasst den am hydraulischen Steuereingang 32 anstehenden hydraulischen Druck. Bei der Ausführungsform nach Figur 4 wird der hydraulische Bremsdruck also mit zwei Drucksensoren 11 und 44 erfasst. Eine derartige doppelte Druckerfassung des hydraulischen Bremsdrucks durch die beiden Drucksensoren 11, 44 kann beispielsweise zur Detektierung von Leckagen oder Druckverlusten im hydraulischen System genutzt werden. Wird ein entsprechender Druckunterschied vom System erkannt, kann eine entsprechende Fehlermeldung beispielsweise in Form eines optischen oder akustischen Signals am Armaturenbrett dem Fahrer angezeigt werden.

In Figur 5 ist die Redundanz-Ventilanordnung 5 gemäß Figur 3 in Teillängsschnitt dargestellt. Das Druckuntersetzer-Relaisventil 41 weist ein Gehäuse 45 auf, in dem ein abgestufter Relaiskolben 46 längsverschieblich gelagert ist. Über den hydraulischen Steuereingang 32 wird nach Betätigung des Bremspedals 9 hydraulische Bremsflüssigkeit eingespeist. Die hydraulische Bremsflüssigkeit beaufschlagt dann eine endseitige Kolbenfläche 47 des Relaiskolbens 46. Hierdurch verschiebt sich der Relaiskolben und drückt eine Stößelfläche 48 gegen eine Ventilhülse 49, welche durch eine Druckfeder 50 gegen einen Ventilsitz 51 gedrückt ist. Bei Bremsbetätigung ist der an die endseitige Kolbenfläche 47 anstehende hydraulische Druck größer als der durch die Druckfeder 50 auf die Ventilhülse 49 ausgeübte Druck, so dass die Ventilhülse 49 verschoben und von ihrem Ventilsitz 51 weggedrückt wird. Das Abheben der Ventilhülse 49 vom Ventilsitz 51 bewirkt, dass der pneumatische Anschluss P1 mit dem pneumatischen Ausgang P2 verbunden wird und Druckluft über den pneumatischen Anschluss P1 mit dem pneumatischen Ausgang P2 strömen kann.

In einer Lösestellung, also beim Lösen des Bremspedals 9, gelangt zum Einen hydraulische Bremsflüssigkeit über einen in Figur 5 nicht dargestellten Rücklauf zurück zum Vorratsbehälter des Hauptzylinders 7. Zum Anderen bewirkt das Nachlassen bzw. Aufhören des hydraulischen Drucks, dass die Druckfeder 50 die Ventilhülse 49 wieder verschiebt und auf ihren Ventilsitz 51 presst, wodurch der pneumatische Eingang P1 vom pneumatischen Ausgang P2 getrennt ist. Eine zweite Druckfeder 52 drückt den Relaiskolben 46 in seine in Figur 5 dargestellte Endstellung bzw. Ruhelage. Eventuell noch im Gehäuse 45 vorhandener pneumatischer Druck wird über einen Entlüftungsauslass 53 an die Umgebung abgegeben.

Das Druckuntersetzer-Relaisventil 41 verfügt zusätzlich zum hydraulischen Anschluss 32 einen pneumatischen Steuerdruck-Anschluss 42 für den pneumatischen Steuerdruckeingang P42, was zuvor bereits anhand der Figur 3 beschrieben wurde. Bei Bremsbetätigung in den pneumatischen Steuerdruck-Anschluss 42 einströmende Druckluft beaufschlagt eine mittlere oder zweite Kolbenfläche 54. Die mittlere oder zweite Kolbenfläche 54 weist dabei einen größeren Durchmesser als die endseitige Kolbenfläche 47 auf. Gelangt pneumatischer Steuerdruck in den pneumatischen Steuereingang 42 und damit auf die zweite Kolbenfläche 54, wird der Relaiskolben 46 in der zuvor beschriebenen Weise verschoben, wobei der größere Kolbendurchmesser der zweiten Kolbenfläche 54 bewirkt, dass der Relaiskolben schneller bewegt wird, wodurch dann letztendlich das Anhängerfahrzeug 22 schneller, dass heißt, voreilend gebremst wird.

Das Redundanz-Magnetventil 31 ist direkt an den pneumatischen Druckausgang P2 angeflanscht. Das Redundanz-Magnetventil 31 weist in an sich bekannter Weise ein durch eine Magnetspule bewegliches Verschlussglied 56 auf, das bei Erregung der Magnetspule 55 gegen den Druck einer Druckfeder in Richtung eines Ventilsitzes 58 gedrückt wird. In der in Figur 5 dargestellten bestromten Stellung ist also das Verschlussglied 56 gegen den Ventilsitz 58 gedrückt, wodurch ein Auslasskanal 59 geschlossen ist, so dass auch bei geöffneter Stellung der Ventilhülse 49 keine Druckluft aus der Redundanz-Ventilanordnung 5 zum Wechselventil 33 und damit zum Steuerdruck-Kupplungskopf 23 gelangen kann.

Die Redundanz-Ventilanordnung 5 gemäß den Figuren 1 und 4 ist grundsätzlich genau wie die Redundanz-Ventilanordnung 5 gemäß Fig. 5 ausgebildet, mit dem einzigen Unterschied, dass das Druckuntersetzer-Relaisventil 30 der Redundanz-Ventilanordnung 5 gemäß den Figuren 1 und 4 keinen pneumatischen Steuerdruck-Anschluss 42 und entsprechend keinen pneumatischen Steuerdruckeingang P42 aufweist, da dieses Druckuntersetzer-Relaisventil 30 rein hydraulisch gesteuert wird.

Neben der zuvor geschilderten Verwendung des erfindungsgemäßen Bremsmoduls 1 für rein hydraulisch gebremste Zugfahrzeuge ist es ebenso denkbar, das Bremsmodul für Zugfahrzeuge einzusetzen, welche über eine so genannte "Air over Hydraulic" (AoH) verfügen. Bei derartigen, beispielsweise aus der DE 10 2011 122 637 A1 bekannten Systemen ist grundsätzlich die gesamte Bremsanlage pneumatisch ausgestaltet, lediglich die Radbremszylinder der einzelnen Räder werden hydraulisch gebremst. Bei diesen Systemen werden so genannten AoH-Konverter eingesetzt, die pneumatischen Druck in hydraulischen Druck für die Radbremszylinder umwandeln. Eigentlich wäre es bei diesen Fahrzeugen möglich, eine rein pneumatische Ansteuerung eines entsprechend ausgebildeten, an sich bekannten Redundanz-Ventils zu ermöglichen. Unter Umständen und für besondere Anwendungsfälle kann es jedoch vorteilhaft sein, wenn der hydraulische Druck der Radbremszylinder herangezogen wird, um eine Redundanz-Ventilanordnung 5 gemäß der zuvor beschriebenen Art zu bedienen.

### Bezugszeichenliste (Teil der Beschreibung)

- 1: Bremsmodul
- 2: Gehäuse
- 3: Elektro-pneumatisches Druckregelmodul
- 4: Steuerelektronik
- 5: Redundanz-Ventilanordnung
- 6: Betriebsbremse
- 7: Hauptbremszylinder
- 8: Bremsbetätigungsorgan
- 9: Bremspedal
- 9a: Bremspedal
- 10: Radbremszylinder
- 11: Drucksensor
- 12: Drucklufterzeugungsanlage
- 13: Kompressor
- 14: Druckregler
- 15: Druckluftbehälter
- 16: Entwässerungsventil
- 17: Manometer
- 18: Druckbegrenzungsventil
- 19: Handbremsventil
- 20: Redundanzventil
- 21: Vorratsdruck-Kupplungskopf
- 22: Anhängefahrzeug
- 23: Steuerdruck-Kupplungskopf
- 24: Einleitungs-Kupplungskopf
- 25: Relaisventil
- 26: Kolben
- 27: Elektrischer Schalter
- 28: Magnetventil
- 29: Magnetventil
- 30: Druckuntersetzer-Relaisventil
- 31: Redundanz-Magnetventil
- 32: Hydraulischer Steuereingang
- 33: Wechselventil
- 34: Zugfahrzeug
- 35: Ackerschlepper
- 36: Vorderrad
- 37: Vorderrad
- 38: Hinterrad
- 39: Hinterrad
- 40: Hinterachse
- 41: Druckuntersetzer-Relaisventil
- 42: Pneumatischer Steuerdruck-Anschluss
- 43: 3/2-Wegeventil
- 44: Drucksensor
- 45: Gehäuse
- 46: Relaiskolben
- 47: Endseitige Kolbenfläche
- 48: Stößelfläche
- 49: Ventilhülse
- 50: Druckfeder
- 51: Ventilsitz
- 52: Zweite Druckfeder
- 53: Entlüftungsauslass
- 54: Zweite Kolbenfläche
- 55: Magnetspule
- 56: Verschlussglied
- 57: Druckfeder
- 58: Ventilsitz
- 59: Auslasskanal

- E1: elektrische Leitung
- E2: elektrische Leitung
- E3: elektrische Leitung
- E4: elektrische Leitung
- E5: elektrische Leitung
- E6: elektrische Leitung
- E7: elektrische Leitung

- H1: Hydraulikdruckleitung
- H2: Hydraulikabzweigleitung
- H41: hydraulischer Steuereingang
- P1: pneumatischer Eingang
- P2: pneumatischer Ausgang
- P3: pneumatischer Entlüftungsausgang
- P11: pneumatischer Vorratsdruck-Eingang
- P11a: pneumatische Vorratsdruckleitung
- P21: pneumatischer Ausgang
- P22: pneumatischer Steuerdruck-Ausgang
- P42: pneumatischer Steuereingang
- P42a: pneumatischer Steuerdruckanschluss
- P43: pneumatischer Steuerdruckeingang

## Patentansprüche

1. Bremsmodul (1) für ein hydraulisch gebremstes Zugfahrzeug (34; 35), welches mit einem pneumatisch gebremsten Anhängefahrzeug (22) koppelbar ist, wobei das Zugfahrzeug eine hydraulisch betätigte Betriebsbremse (6) aufweist, welche wenigstens einen durch ein Bremsbetätigungsorgan (8; 9, 9a) betätigbaren Hauptbremszylinder (7) zur Erzeugung eines Hydraulikdrucks in wenigstens einem Radbremszylinder (10) wenigstens eines Rades (36; 37; 38; 39) des Zugfahrzeuges (34; 35) aufweist, wobei wenigstens ein Drucksensor (11; 44) an eine vom Hauptbremszylinder (7) abgehende hydraulische Druckleitung (H1; H2) zur Erfassung des hydraulischen Drucks angeschlossen ist,
wobei das als Anhängersteuerventil dienende Bremsmodul (1) ein elektro-pneumatisches Druckregelmodul (3) mit einer elektronischen Steuerung (4) aufweist, welche wenigstens die Drucksignale vom Drucksensor (11; 44) erhält und in Steuerimpulse für im elektro-pneumatisches Druckregelmodul (3) angeordnete elektro-magnetische Steuerventile (28, 29) umsetzt, wobei die Steuerventile (28, 29) eingangsseitig über einen pneumatischen Vorratsdruck-Eingang (P11) mit einem Druckluftbehälter (15) und ausgangseitig über einen pneumatischer Steuerdruck-Ausgang (P22) mit einem Steuerdruck-Kupplungskopf (23) verbunden sind,
und wobei das als Anhängersteuerventil dienende Bremsmodul (1) eine Redundanz-Ventilanordnung (5) aufweist, welches über einen hydraulischen Steuereingang (H41) an eine vom Hauptbremszylinder (7) abgehende hydraulische Druckleitung (H1; H2) und über einen pneumatischen Eingang (P1) mit dem Druckluftbehälter (15) verbunden ist, wobei der hydraulische Steuerdruck das Maß des pneumatischen Ausgangsdrucks an einem pneumatischen Ausgang (P2) der Redundanz-Ventilanordnung (5) bestimmt,
wobei im Falle eines Ausfalls wenigstens einer für den Betrieb des Bremsmoduls (1) relevanten elektrischen oder elektronischen Komponente der pneumatische Ausgang (P2) der Redundanz-Ventilanordnung (5) mit dem Steuerdruck-Kupplungskopf (23) verbunden ist, während bei fehlerfreiem Betrieb der für den Betrieb des Bremsmoduls (1) relevanten elektrischen oder elektronischen Komponenten der pneumatische Ausgang (P2) der Redundanz-Ventilanordnung (5) vom Steuerdruck-Kupplungskopf (23) getrennt ist,
**dadurch gekennzeichnet, dass** das elektro-pneumatische Druckregelmodul (3) und die Redundanz-Ventilanordnung (5) pneumatisch parallel zueinander geschaltet sind, wobei der pneumatische Ausgang (P2) der Redundanz-Ventilanordnung (5) ausschließlich mit dem Steuerdruck-Kupplungskopf (23) verbindbar ist.

2. Bremsmodul nach Anspruch 1, **dadurch gekennzeichnet, dass** ein Wechselventil (33) eingangsseitig mit dem pneumatische Ausgang (P2) der Redundanz-Ventilanordnung (5) bzw. mit dem pneumatischen Steuerdruck-Ausgang (P22) des elektro-pneumatischen Druckregelmoduls (3) und ausgangsseitig mit dem Steuerdruck-Kupplungskopf (23) verbunden ist.

3. Bremsmodul nach Anspruch 1 oder 2, **dadurch gekennzeichnet, dass** die Redundanz-Ventilanordnung (5) aus einem mechanischen Druckuntersetzer-Relaisventil (30; 41) und einem im unbestromten Zustand offenen Redundanz-Magnetventil (31) besteht, wobei das Redundanz-Magnetventil (31) im bestromten Zustand den pneumatische Ausgang (P2) der Redundanz-Ventilanordnung (5) absperrt und im unbestromten Zustand den pneumatische Ausgang (P2) der Redundanz-Ventilanordnung (5) frei gibt.

4. Bremsmodul nach Anspruch 3, **dadurch gekennzeichnet, dass** das Druckuntersetzer-Relaisventil (41) einen hydraulischen Steuereingang (32) und einen pneumatischen Steuereingang (42) aufweist.

5. Bremsmodul nach Anspruch 4, **dadurch gekennzeichnet, dass** das Bremsbetätigungsorgan (8; 9, 9a) mit einem an den Druckluftbehälter (15) angeschlossen 3/2-Wegeventil (43) verbunden ist, welches bei Betätigung des Bremsbetätigungsorgans (8; 9, 9a) geöffnet ist und Druckluft zum Anschluss (P42) und in den pneumatischen Steuereingang (42) des Druckuntersetzer-Relaisventils (41) freigibt.

6. Bremsmodul wenigstens nach Anspruch 3, **dadurch gekennzeichnet, dass** das Redundanz-Magnetventil (31) direkt an den pneumatischen Druckausgang (P2) des Druckuntersetzer-Relaisventils (30; 41) angeflanscht ist.

7. Bremsmodul wenigstens nach Anspruch 1, **dadurch gekennzeichnet, dass** das Druckregelmodul (3), die elektronische Steuerung (4) und die Redundanz-Ventilanordnung (5) in einem gemeinsamen Gehäuse (2) angeordnet sind.

8. Bremsmodul nach einem der Ansprüche 1 - 6, **dadurch gekennzeichnet, dass** das Druckregelmodul (3), die elektronische Steuerung (4) und die Redundanz-Ventilanordnung (5) aneinander angeflanscht sind.

## Claims

1. Brake module (1) for a hydraulically braked towing vehicle (34; 35) which can be coupled to a pneumatically braked trailer vehicle (22), the towing vehicle having a hydraulically actuated service brake (6) which has at least one brake master cylinder (7) which can be actuated by a brake actuating member (8; 9, 9a) in order to generate a hydraulic pressure in at least one wheel brake cylinder (10) of at least one wheel (36; 37; 38; 39) of the towing vehicle (34; 35), at least one pressure sensor (11; 44) being connected to a hydraulic pressure line (H1; H2) which emanates from the brake master cylinder (7) in order to detect the hydraulic pressure,
the brake module (1) which serves as trailer control valve having an electropneumatic pressure regulating module (3) with an electronic controller (4) which receives at least the pressure signals from the pressure sensor (11; 44) and converts them into control pulses for electromagnetic control valves (28, 29) which are arranged in the electropneumatic pressure regulating module (3), the control valves (28, 29) being connected on the inlet side via a pneumatic supply pressure inlet (P11) to a compressed air reservoir (15) and being connected on the outlet side via a pneumatic control pressure outlet (P22) to a control pressure coupling head (23),
and the brake module (1) which serves as trailer control valve having a redundancy valve arrangement (5), which brake module (1) is connected via a hydraulic control inlet (H41) to a hydraulic pressure line (H1; H2) which emanates from the brake master cylinder (7) and via a pneumatic inlet (P1) to the compressed air reservoir (15), the hydraulic control pressure determining the magnitude of the pneumatic outlet pressure at a pneumatic outlet (P2) of the redundancy valve arrangement (5),
the pneumatic outlet (P2) of the redundancy valve arrangement (5) being connected to the control pressure coupling head (23) in the case of a failure of at least one electric or electronic component which is relevant for the operation of the brake module (1), whereas the pneumatic outlet (P2) of the redundancy valve arrangement (5) is disconnected from the control pressure coupling head (23) in the case of fault-free operation of the electric or electronic components which are relevant for the operation of the brake module (1),
**characterized in that** the electropneumatic pressure regulating module (3) and the redundancy valve arrangement (5) are connected pneumatically in parallel to one another, it being possible for the pneumatic outlet (P2) of the redundancy valve arrangement (5) to be connected exclusively to the control pressure coupling head (23).

2. Brake module according to Claim 1, **characterized in that** a shuttle valve (33) is connected on the inlet side to the pneumatic outlet (P2) of the redundancy valve arrangement (5) and to the pneumatic control pressure outlet (P22) of the electropneumatic pressure regulating module (3) and is connected on the outlet side to the control pressure coupling head (23).

3. Brake module according to Claim 1 or 2, **characterized in that** the redundancy valve arrangement (5) consists of a mechanical pressure reducer relay valve (30; 41) and a redundancy solenoid valve (31) which is open in the non-energized state, the redundancy solenoid valve (31) shutting off the pneumatic outlet (P2) of the redundancy valve arrangement (5) in the energized state and opening the pneumatic outlet (P2) of the redundancy valve arrangement (5) in the non-energized state.

4. Brake module according to Claim 3, **characterized in that** the pressure reducer relay valve (41) has a hydraulic control inlet (32) and a pneumatic control inlet (42).

5. Brake module according to Claim 4, **characterized in that** the brake actuating member (8; 9, 9a) is connected to a 3/2-way valve (43) which is connected to the compressed air reservoir (15) and is open upon actuation of the brake actuating member (8; 9, 9a) and releases compressed air to the connector (P42) and into the pneumatic control inlet (42) of the pressure reducer relay valve (41).

6. Brake module at least according to Claim 3, **characterized in that** the redundancy solenoid valve (31) is flange-connected directly to the pneumatic pressure outlet (P2) of the pressure reducer relay valve (30; 41).

7. Brake module at least according to Claim 1, **characterized in that** the pressure regulating module (3), the electronic controller (4) and the redundancy valve arrangement (5) are arranged in a common housing (2) .

8. The brake module according to one of Claims 1 to 6, **characterized in that** the pressure regulating module (3), the electronic controller (4) and the redundancy valve arrangement (5) are flange-connected to one another.

## Revendications

1. Module de freinage (1) pour un véhicule de traction à freinage hydraulique (34 ; 35) pouvant être couplé à une remorque à freinage pneumatique (22), dans lequel le véhicule de traction comporte un frein de service (6) actionné hydrauliquement qui présente au moins un maître-cylindre de frein (7) pouvant être actionné par un organe d'actionnement de frein (8 ; 9, 9a) pour générer une pression hydraulique dans au moins un cylindre de frein de roue (10) d'au moins une roue (36 ; 37 ; 38 ; 39) du véhicule de traction (34 ; 35), dans lequel au moins un capteur de pression (11 ; 44) est relié à une conduite de pression hydraulique (H1 ; H2) partant du maître-cylindre de frein (7) pour détecter la pression hydraulique,
dans lequel le module de freinage (1), qui sert de vanne de commande de remorque, comporte un module de régulation de pression électropneumatique (3) muni d'une unité de commande électronique (4), qui reçoit au moins les signaux de pression du capteur de pression (11 ; 44) et les convertit en impulsions de commande destinées à des vannes de commande électromagnétiques (28, 29) disposées dans le module de régulation de pression électropneumatique (3), dans lequel les vannes de commande (28, 29) sont reliées, côté entrée, à un réservoir d'air comprimé (15) par l'intermédiaire d'une entrée de pression de réserve pneumatique (P11) et, côté sortie, à une tête de couplage de pression de commande (23) par l'intermédiaire d'une sortie de pression de commande pneumatique (P22),
et dans lequel le module de freinage (1), qui sert de vanne de commande de remorque, comporte un dispositif de vanne de redondance (5) qui est relié par l'intermédiaire d'une entrée de commande hydraulique (H41) à une conduite de pression hydraulique (H1 ; H2) partant du maître-cylindre de frein (7) et par l'intermédiaire d'une entrée pneumatique (P1) au réservoir d'air comprimé (15), dans lequel la pression de commande hydraulique détermine la valeur de la pression de sortie pneumatique au niveau d'une sortie pneumatique (P2) du dispositif de vanne de redondance (5),
dans lequel, en cas de défaillance d'au moins un composant électrique ou électronique important pour le fonctionnement du module de freinage (1), la sortie pneumatique (P2) du dispositif de vanne de redondance (5) est reliée à la tête de couplage de pression de commande (23), tandis qu'en cas de fonctionnement sans défaillance des composants électriques ou électroniques importants pour le fonctionnement du module de freinage (1), la sortie pneumatique (P2) du dispositif de vanne de redondance (5) est séparée de la tête de couplage de pression de commande (23),
**caractérisé en ce que** le module de commande de pression électropneumatique (3) et le dispositif de vanne de redondance (5) sont connectés pneumatiquement en parallèle les uns aux autres, dans lequel la sortie pneumatique (P2) du dispositif de vanne de redondance (5) peut être reliée exclusivement à la tête de couplage de pression de commande (23).

2. Module de freinage selon la revendication 1, **caractérisé en ce qu'**une vanne de sélection (33) est reliée, côté entrée, à la sortie pneumatique (P2) du dispositif de vanne de redondance (5) ou à la sortie de pression de commande pneumatique (P22) du module de régulation électropneumatique (3) et, côté sortie, à la tête de couplage de pression de commande (23).

3. Module de freinage selon la revendication 1 ou 2, **caractérisé en ce que** le dispositif de vanne de redondance (5) se compose d'une vanne relais de réduction de pression mécanique (30 ; 41) et d'une électrovanne de redondance (31) qui est ouverte à l'état non alimenté, dans lequel l'électrovanne de redondance (31), à l'état alimenté, coupe la sortie pneumatique (P2) du dispositif de vanne de redondance (5) et, à l'état non alimenté, libère la sortie pneumatique (P2) du dispositif de vanne de redondance (5) .

4. Module de freinage selon la revendication 3, **caractérisé en ce que** la vanne relais de réduction de pression (41) comporte une entrée de commande hydraulique (32) et une entrée de commande pneumatique (42) .

5. Module de freinage selon la revendication 4, **caractérisé en ce que** l'organe d'actionnement de frein (8 ; 9, 9a) est relié à une vanne à 3/2 voies (43) raccordée au réservoir d'air comprimé (15), qui est ouverte lors de l'actionnement de l'organe d'actionnement de frein (8 ; 9, 9a) et libère l'air comprimé vers le raccord (P42) et dans l'entrée de commande pneumatique (42) de la vanne relais de réduction de pression (41).

6. Module de freinage au moins selon la revendication 3, **caractérisé en ce que** l'électrovanne de redondance (31) est directement reliée par bride à la sortie de pression pneumatique (P2) de la vannerelais de réduction de pression (30 ; 41).

7. Module de freinage au moins selon la revendication 1, **caractérisé en ce que** le module de régulation de pression (3), l'unité de commande électronique (4) et le dispositif de vanne de redondance (5) sont disposés dans un boîtier commun (2) .

8. Module de freinage selon l'une des revendications 1 à 6, **caractérisé en ce que** le module de régulation de pression (3), l'unité de commande électronique (4) et le dispositif de vanne de redondance (5) sont fixés par brides les uns aux autres.
